# EUROPEAN PATENT APPLICATION

(11) **EP 1 427 224 A2**
(43) Date of publication of application: **09.06.2004**
(21) Application number: 03257571.4
(22) Date of filing: 02.12.2003
(51) Int. Cl.: H04N 17/00

(54) **Analysis of digital signals**

(30) Priority: 03.12.2002 GB 0228209
(71) Applicant: BRITISH BROADCASTING CORPORATION, London W1A 1AA (GB)
(72) Inventor: Tanton, Nicholas Edward, South Holmwood, Dorking, Surrey RH5 4NX (GB); MacNeill, Christine Sheena, Penn, Wolverhampton WV4 5SP (GB)
(74) Representative: Kazi, Ilya

(57) **Abstract**

A method of processing a data stream in which captions are transmitted, for example a television signal. The method comprises determining at least one quantitative characteristic of variation in information content used for transmission of the captions and assigning a caption type to the data stream based on the or each characteristic.

## Description

The present invention relates to the field of digital communications and provides a system and method for analysing digital signals, particularly digital television signals.

Subtitles have been supplied with broadcast programmes using the teletext system for many years. Monitoring of the content of the subtitles by parsing the text of the subtitles may be advantageous since it may allow the service provider to monitor the content of the programme being broadcast, or ensure that the correct subtitles are being broadcast for a particular programme.

Subtitles and captions associated with digital terrestrial television (DTT) signals are transmitted as bit-mapped images, rather than as text as was the case in the prior teletext based system. Since the subtitles are broadcast as bit mapped images, simple monitoring of the subtitle content by parsing the subtitles is not possible.

The present invention aims to provide a method of monitoring subtitles and captions which does not require parsing of the text of the subtitles.

Aspects of the invention are outlined in the independent claims below and preferred features are outlined in the dependent claims.

A first aspect provides a method of processing a data stream in which captions are transmitted, the method comprising determining at least one quantitative characteristic of variation in information content of the captions and assigning a caption type to the data stream based on the or each characteristic.

The method advantageously allows a caption type to be assigned to the data stream without the captions themselves having to be decoded and analysed. The caption type can be assigned based on a quantitative characteristic of the variation in information content of the data stream. This can be achieved relatively simply (analysis of the images themselves or even parsing of the text would be complex) but is found to be surprisingly effective. The captions may be, for example, subtitles, sign-language captions or audio description captions, or a combination of different types of captions may be transmitted in the data stream. The system may be arranged to detect the presence of captions in the data stream and a measure of the type of captions being transmitted.

According to one preferred embodiment, the captions are transmitted as a series of images. This may be the case, for example, in systems where the captions are subtitles transmitted as bit mapped images, such as in DTT signals. The methods described herein are particularly advantageous when used with bit mapped images, since analysing the images themselves would be time consuming and require significant data processing before an estimate of the programme type could be determined.

A sample of quasi-instantaneous information rate may be detected by determining a measure of information in a first, sampling, interval. An average information rate may be determined over a second, longer, averaging period from a plurality of samples.

Preferably, the at least one quantitative characteristic includes a measure of the bit rate associated with transmission of the captions. Hence the bit rate of a component of the data stream associated with the captions may be measured and used to detect variation in the information content.

Where a variable bit rate for the captions, is used, e.g. in Digital Terrestrial Television, this may be directly measured. In a teletext-type system where fixed size frames on pages are used, the information context can be monitored by detecting the amount of actual information (e.g. text as opposed to space) in each frame/page and, where applicable, the rate of update/change of the information.

The caption type is preferably selected from one of a plurality of pre-defined caption types. Hence, the data stream may be classified into one out of a predetermined set of types.

Preferably, assigning a caption type includes identifying an error or abnormal caption condition. This may allow a service operator to be alerted to an erroneous or abnormal caption condition, which may indicate, for example, a fault in the transmission of the data stream. The identification of abnormal conditions may highlight to the service operator any portions of the data stream for which further or deeper analysis may be beneficial. Hence the system may assist in fault detection or monitoring of the signal output and may help a broadcaster or user to police Service Level Agreements (SLAs), as discussed further below.

Preferably, the plurality of pre-defined caption types includes at least one of: an absence of captions, a predetermined caption, for example an error or apology caption or a cleardown instruction, a series of pre-prepared block captions of at least one type, a series of pre-prepared short captions, a sequence of live captions and an uncertain or unidentified caption type. It is found that these different caption types may relatively reliably be determined from characteristics of the data stream, as described in more detail below, and provide useful measures of the content of the captions and data stream.

In some instances, more than one candidate pre-defined caption type may be assigned to the data stream. This may be advantageous when the true caption type is unclear and further analysis of the data stream is necessary to determine the caption type.

According to a further, highly preferable feature, an initial assignment of more than one candidate caption type is refined based on the history of the data stream. A caption type may be determined based on the history of caption types for that data stream. For example, the system may be arranged so that a caption type that has frequently occurred in the recent history of the data stream is favoured over a new caption type. This may reduce the occurrence of sudden and incorrect changes in the detected caption type due to transients in the data.

According to a preferable embodiment, the captions comprise subtitles. Preferably the subtitles are bit mapped images.

According to a further embodiment, the captions may comprise information for an access service other than subtitles, for example, the captions may comprise audio description information or closed signing.

According to a further preferable embodiment, the data stream comprises a television signal.

Preferably, more than one type of caption may be analysed, if present.

In one embodiment, a caption type may be assigned signifying detection of presence or absence of the captions in place of detection of a quantitative measure.

A further aspect may provide a method of processing a data stream in which a non-textual access service may be transmitted, the method comprising determining variation in information content used for transmission of the access service and classifying the data stream based on the variation.

Preferably, a programme type may be assigned to the data stream based on the caption type assigned to the data stream. Hence, the method may provide a convenient method of determining the programme types in a television broadcast signal.

Further preferably, the programme type classification comprises at least one of: no subtitles, pre-recorded, as live, live broadcast. Other programme types may also be incorporated into the system. In some cases, the types listed here may be further refined by additional statistical analysis of the data stream and optionally other information, for example from scheduling information or time of broadcast, eg. a pre-recorded programme may be further classified as, for example, (likely to be) a drama or a children's program.

The method preferably further comprises detecting at least one interstitial in the data stream. The interstitial may be due to, for example, a change in the programme transmitted or an advertisement break. An interstitial may be signified by detection of a sudden change in caption type (or the absence of captions) and may be supplemented by programme schedule information or a real time input, optionally based on the premise that intervals occur regularly within a programme and typically predominantly certain absolute times, e.g. whole hour and half past the hour as absolute times. Detection of interstitials may allow a user device or a broadcaster to determine the beginning or end of a programme which may, for example, trigger a recording device to commence, pause, or cease recording of a programme. Viewing or storage may be controlled, for example a user may express a preference to mute sound or change channel during advertisements or to skip them when recording a programme.

The method preferably further comprises detecting at least one interstitial between determined programme types in the data stream. The method of detecting the interstitial may further comprise determining the nature of the interstitial, which may be due to, for example, a change in the programme transmitted or an advertisement break. Interstitials may be detected by the broadcaster or by user detection at a viewer end may, for example, allow a recording device to commence or cease recording of a particular programme.

Preferably, the method further comprises detecting whether captions are transmitted in the data stream. The data stream may be monitored or tested at intervals to determine whether captions are being transmitted at that time and the caption type may then only be determined if the data stream has accompanying captions. This may reduce the amount of processing necessary if captions are not transmitted with the data stream at all times. Apparatus or a process may be arranged to sample the data stream at intervals in a snooze mode and to wake up into an active mode when captions, for example subtitles or another access service is detected. In the case of an access service which is transmitted only with certain programmes, a user may be alerted to the presence of a programme containing the access service, as discussed further below.

As noted above, it has been appreciated that useful information can be obtained by quantitative variation in information content of subtitles (transmitted primarily for the benefit of the hearing impaired). It has further been appreciated that detection of other "access" services, for example audio description (transmitted primarily for the visually impaired), closed signing (transmitted typically for the hearing impaired, typically as an alternative in place of subtitles), etc may be useful. Thus the first aspect may be applied more generally to access services and reference to caption in the context of the first aspect is preferably not limited to textual captions such as subtitles but preferably includes "captions" which may comprise other forms of access service data such as audio description information, signing and other services, preferably "closed" services (i.e. services which may be selectively "viewed").

It has been appreciated that some access services are unlikely to be transmitted with all programmes, and hence binary detection of the presence or absence of an access service component may itself be directly useful (as well as or instead of quantitative analysis). For example, audio description is unlikely to be transmitted with a data stream that contains a news programme. In all cases, detection may be used to detect whether the access service is present. For a viewer, this can be used to trigger preferential recording of programmes having the service and for e.g. a broadcaster, can be used to monitor correct delivery of the access service. Thus in a closely related further aspect, the invention provides a method of processing a (televisual programme) data stream in which a non-textual access service may be transmitted, the method comprising determining variation in information content used for transmission of the access service and classifying the data stream based on the variation. A quantitative measure of information content may be useful in the case of many access services, although a fixed bit rate audio description may require analysis of the audio to determine information content. However, as noted above, simply determining binary variation (presence or absence of the access service) may be useful.

A further aspect provides a method of classifying a programme, the method comprising receiving a signal encoding the programme and a series of captions, determining at least one quantitative characteristic of variation in the information content of the series of captions and classifying the programme into one of a series of predefined programme types based on the or each characteristic. This method may provide a convenient way of classifying programmes without requiring the decoding and analysis of the captions (e.g. subtitles) themselves.

Preferably, the captions comprise subtitles and further preferably, the subtitles are bit mapped images.

According to a highly preferable embodiment, the characteristic includes at least one statistical measure of the bit rate, and is preferably a combination of at least two statistical measures. Using a combination of two or more statistical measures of the bit rate is found to increase significantly the accuracy of the determined programme type. If the statistical measure is above or below a predetermined threshold, however, only one statistical measure of the information content may be used to classify the programme. This may allow more efficient determination of the programme type when the first statistical measure gives a clear result above or below a predetermined threshold.

Preferably, the statistical measures include at least one of: the average bit rate, the number of contiguous seconds of bit rate above or below a threshold, the number of contiguous seconds of zero bit rate, the histogram peak bit rate for a period, the histogram peak, over a predetermined period, of the number of contiguous seconds of zero bit rate and the accumulated bit rate. These statistical measures are described in more detail below, but each measure can be quickly determined from a data stream and provides a useful indicator of the programme type.

Preferably, the method further comprises deriving a measure of confidence for the determined programme classification. The determined programme classification may be made more useful if the user, typically in this case a service operator, is also provided with a confidence measure for the classification. The measure of confidence may be based on how closely the statistical measure for the data fits the expected pattern for the determined programme type or for any programme type.

Further preferably, the measure of confidence is updated as more data is received in the signal. If the determined programme type remains constant for a large portion of data, then the confidence level may increase. Hence, the history of the determined programme type for the data may be important in determining the confidence level.

According to a further preferable embodiment, the determined classification has hysteresis characteristics and is preferably partly determined based on the history of the quantitative characteristic. Hence the programme type determined for the previous section of data preferably influences the programme type determined for the next section of data. This may encourage consistency in the programme type determined for the data.

According to a related feature, sudden and/or highly transient changes in the determined programme classification may be suppressed or processed as exceptions. This is advantageous, since a brief transient (e.g. above 10 (or 30) seconds or less) change in the programme type is unlikely. Longer transients (e.g. more than about 10 (or 30) seconds) up to a few minutes e.g. (up to 5 (or in some cases 10) minutes) may be detected as an interstitial (e.g. commercial break) as discussed below. The programme type may change from one programme to the next, but these longer term changes would preferably not be suppressed. A change back from the interstitial characterising to the previous classification may be detected as resumption of a programme and a change to a new characteristic may be detected as commencement of a new programme.

Preferably, an initial set of parameters are stored for classifying the programme. Hence the initial programme type may be predefined or determined before the data stream analysis starts.

Preferably, the initial parameters are modified based on the received data. This may allow the determined programme type to change as data is received.

According to a further preferable embodiment, the method further comprises monitoring the content of the programme viewed based on the programme type assigned to the data stream.

All the above methods may advantageously be used to monitor programme output. The above methods may further comprise monitoring programme output based on analysis of captions and/or classification based on a non-textual access service. This method may be followed by reporting the results of monitoring a plurality of channels and/or programmes to a user interface. The method may further comprise triggering an alarm based on the results of monitoring. A live alarm may be triggered during broadcast of a monitored programme. Advantageously a report on broadcast of a plurality of programmes following broadcast may be compiled. These methods may be used by a broadcaster to monitor output.

The analysis may be supplemented by information available from another source of programme information, for example schedule information. In the case of a broadcaster monitoring output, the analysis method/apparatus may receive schedule information including information indicating the presence or absence of captions of a particular format (e.g. subtitles or other access service) and monitoring may include determining whether scheduled captions are present. The schedule information may include an indication of programme type and/or programme name. Analysis may include fitting caption type to programme type, or to an individual prgramme, and may include refining parameters associated with caption analysis based on input concerning programme type or particular programmes.

The results of the refinement may be stored or communicated for use in subsequent analysis. The analysis method may include performing analysis based on a plurality of measures, wherein a set of classification parameters are set to initial values and wherein the classification parameters are updated following analysis. Classification parameters may be updated by a user (e.g. a broadcaster) who has full or detailed knowledge of the programme being analysed and the classification parameters may be communicated to an analysis engine, for example at a viewer site, (dynamically, by periodic update or on initial configuration) to assist in analysis.

By providing additional information to the analysis method/apparatus, an expert system can be developed which □learns□ to recognise programme types or individual programmes and can be used to detect correct transmission of a schedule or to detect faults. Even if the system is not able to provide complete analysis, it may nonetheless provide a useful tool to a broadcaster. For example, an analysis engine may analyse output and the output may be recorded. The analysis engine may provide a log of determined programme type and may log uncertainties or errors in the captions. By cross-referencing the log with the recording, the amount of the recording to be checked to verify acceptable delivery may be reduced. Particularly if the analysis engine is provided with schedule information, a log may be provided of points where analysis is consistent with the schedule information and where there are discrepancies or uncertainties or caption errors. This may be dynamically linked to the recording so that an operator may jump through the recording based on the analysis to verify such uncertainties manually.

In a further aspect, the invention provides apparatus for analysing programme output comprising means for analysing captions or an access service in conjunction with other programme information identifying expected programme output and means for reporting a potential discrepancy between the results of analysis of the captions or access service and the expected programme output. The invention further provides corresponding method and computer program aspects.

As noted above, the content of the programme being viewed may be monitored by the service operator. This analysis may be performed at a broadcast or network point or remotely via a monitoring device receiving the broadcast service. Monitoring may be impersonal, used to check delivery of a service, or personal, which may allow the service operator to create a profile of one or more individual service users which may be used, for example, to target advertising material sent to the user.

In addition, or alternatively, to monitoring by a service operator, the programme type may be monitored locally at the user site. According to one embodiment, this may allow a user device, for example a video storage or recording device, to build up a profile of the service user based on the programmes watched. The profile information may then be used, for example to inform a user when a particular type of programme is showing or to record certain types of programmes automatically.

Preferably, the method further comprises storing a programme or controlling storage of programmes based on the programme type determined. This may allow a video recording or storage device to store programmes corresponding to a particular programme type.

According to a preferable feature, the method further comprises receiving further input concerning the expected programme types, such as schedule information. Hence the determined programme type may be compared to the expected programme type. A broadcaster or user may be alerted to any anomalies detected. This may be used by a broadcaster to detect faults in the programme output or signal multiplex or faults in the transmission of captions such as subtitles, signing or audio description captions.

Preferably, the method further comprises storing and updating a list of user preferences based on the determined programme type. The user preference list may be used to build up a profile of the user, which may be used by the service provider to provide additional content, such as targeted information, to the user.

A further aspect provides apparatus for processing a data stream in which captions are transmitted, the apparatus comprising:
means for receiving the data stream;
means for determining at least one quantitative characteristic of variation in information content used for transmission of the captions;
means for assigning a caption type to the data stream based on the or each characteristic.

According to one embodiment, the captions are transmitted as a series of images.

Preferably, the at least one quantitative characteristic includes a measure of bit rate associated with the captions.

As discussed above, this may provide means for analysing captions within a data stream without rendering the captions and decoding them for analysis.

Preferably, the apparatus further comprises means for storing the determined bit rate value for a predetermined initialisation period. Hence the history of the bit rate of the data stream may be taken into account in assigning the caption type to the data stream.

Preferably, the quantitative characteristic comprises at least one of:
the average bit rate;
the number of contiguous seconds of bit rate above or below a threshold;
the number of contiguous seconds of zero bit rate;
the histogram peak bit rate for a period;
the histogram peak, over a predetermined period, preferably the initialisation period, of the number of contiguous seconds of zero bit rate;
the accumulated bit rate.

These statistical measures, or preferably a combination of the measures, may easily be calculated from the determined bit rate as described herein and may provide useful indicators of the caption type.

Preferably, the data stream is a digital television signal and the captions are subtitles. Hence a digital television service provider may monitor the content of the subtitles sent out with programmes, or of the programmes themselves. According to an alternative embodiment, the captions may be audio description captions or sign-language captions, or another non-textual access service.

In one embodiment, a binary determination may be used in place of said quantitative measure.

Preferably, the apparatus further comprises means for determining a programme type based on the assigned caption type for the data stream.

According to a further preferable feature, the caption type determined is at least one of:
an absence of captions;
a predetermined caption, for example an error or apology caption or a cleardown instruction;
a series of pre-prepared block captions of at least one type;
a series of pre-prepared short captions;
a sequence of live captions;
an uncertain or unidentified caption type.

According to a further preferable feature, the apparatus further comprises video storage means. This may allow programmes, or parts of programmes to be stored by the user or by the service provider.

Preferably, the apparatus further comprises means for storing a list of user preferences based on the determined programme types for the programmes viewed.

This feature may be provided in conjunction with the video storage feature or may be provided independently.

Preferably, the apparatus further comprises means for updating the user preference list according to the programme type viewed.

Features of the method aspects may be applied to the apparatus aspects and vice versa and features of method and apparatus aspects may be applied to other method and apparatus aspects.

A further aspect provides a computer program or computer program product for carrying out a method according to any of the method aspects or any of their optional features.

An embodiment of the invention will now be described in more detail with reference to the figures in which:
Figure 1a to Figure 1g show examples of possible bit rate distributions for a data stream over a number of periods according to one embodiment;
Figure 2 illustrates the relationship between several subtitle genres and quantities determined by statistical analysis according to one embodiment;
Figures 3a and 3b provide an example of data analysed according to one embodiment of the systems and methods described herein;
Figures 4a and 4b provide a further example of data analysed according to one embodiment of the systems and methods described herein;
Figures 5a and 5b provide a further example of data analysed according to one embodiment of the systems and methods described herein.

The invention is described below with reference to a data stream in which subtitles for Digital Terrestrial Television (DTT) are transmitted. However, the description is not intended to be limiting and the invention may be applied to other types of captions such as audio description captions or sign-language captions transmitted in conjunction with other types of signal.

As discussed above, subtitles for Digital Terrestrial Television (DTT) are transmitted as bit-mapped images, rather than the traditional characters of a teletext system. Full monitoring of subtitle content therefore generally requires the decoding of Digital Video Broadcast (DVB) subtitles and other digital system subtitles and then rendering of the subtitles in some legible form. For a multichannel multiplex, monitoring content can therefore require a considerable amount of technology and/or human interaction. The systems and methods described herein provide a practical means for the determination of the broad nature of the subtitles (for example, are there subtitles present and are they consistent with the currently broadcasted programme?) without directly checking the subtitle textual content. This allows first-line monitoring of the subtitles in a simple, fast and cost-effective manner.

Subtitles are transmitted on a just-in-time basis and so the bit rate usage varies according to application and in particular, according to the type of programme being broadcast. For example, a drama can have subtitles that are up to three lines long being transmitted once every few seconds, whereas a news bulletin will usually have live subtitling in which individual words are being transmitted almost at the rate of speech and so the bit rate stream is continual. Furthermore, during times when nothing is being said (or when no subtitles have been scheduled), a "cleardown" message is often transmitted to remove the last subtitle. Also, apology captions may be transmitted when a fault has been detected upstream of the subtitle inserter. However, no bit rate being transmitted is not necessarily a fault condition.

It is noted that the captions may be transmitted at a constant bit rate and other statistical measures of the information content (for example identification of "real" information as opposed to padding) may be measured and used to determine the programme type.

All these subtitling conditions have different cadences through their differing bit rates and timing between subtitles. The cadence of a subtitle may be characterised by the number of bits transmitted in a predetermined sampling period and the length of the gaps between subtitle transmissions.

The predetermined sampling period is preferably of the order of 1 second, but this may be made shorter or longer depending on the system requirements or on the type of programme detected or expected. A shorter sampling period may increase the accuracy of the programme type determined, but may require a higher data processing speed for the system. A longer data sampling period may be set, for example if the programme is not expected to contain subtitles. The sampling period may also vary whilst the system is in operation, for example, the sampling period may increase if there is a long period with a low or periodic bit rate, or the sampling period may decrease, for example if the bit rate becomes high or aperiodic.

As described in more detail below, the samples obtained in each sampling period are themselves preferably averaged over a second, longer predetermined averaging period, e.g. over 10 seconds, to determine a moving average for the data stream. This may be used alone or in conjunction with other measures, as described below, to determine a programme type or a caption type for the data stream.

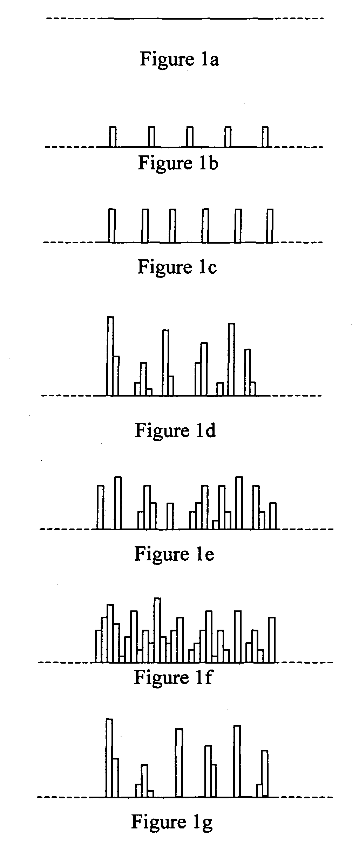

A number of examples of cadences are shown in Figures 1 a to 1 g and the cadences and possible interpretations of the cadences are discussed in more detail below.

Figure 1 a shows a cadence for a zero bit rate. No bits of data are detected in any sampling period. Detection of a zero bit rate could indicate that there are no subtitles or captions associated with the programme or that there is a fault with the subtitle or caption service. If a zero bit rate is detected over an extended period, or is detected when it is not expected, then the system could be configured to send a warning signal to the service operator.

Figure 1 b shows a cadence for a periodic signal with low peak rates. Such a signal may be generated by a subtitle "cleardown" signal, which may be sent to ensure that no subtitles or captions are displayed when none are scheduled. Alternatively, the cadence may be generated at an interval in the programme, when there are no subtitles or captions but there may be on-screen graphics generating a periodic low peak rate signal.

The cadence of Figure 1 c has a periodic data rate with moderate peak rates. This may be generated, for example, by an apology message, which may be transmitted when a fault condition has been detected upstream of the subtitle or caption inserter.

Figure 1d shows an aperiodic cadence with a low or moderate average bit rate, but with high peak bit rates. This type of cadence may be typical of block subtitles or captions, which may be broadcast in conjunction with a prerecorded programme which contains dialogue, for example, a drama.

Figure 1 e also shows an aperiodic cadence, but with a low average bit rate and moderate peak bit rates. This may also be interpreted as block subtitles or captions, but the subtitles are more likely to be being broadcast in conjunction with, for example a children's program, which is not as dialogue-intensive as a drama programme.

The cadence of Figure 1f is also aperiodic and has a low or moderate average bit rate and a moderate or high peak bit rate. This may correspond to a live broadcast, such as a live news programme.

Figure 1g shows a semi-periodic cadence with a low or moderate average bit rate and high peak bit rates. This may correspond to as-live subtitles or captions, (e.g. sign-language captions) such as those broadcast with prepared parts of a news report.

As suggested above, analysis of the bit rate usage for DVB subtitles, measured from the transmitted stream, may be performed to determine a cadence. The cadence may then be used to infer something of the nature of the subtitles or captions.

Data may be gathered by any technique that is able to analyse a DVB transport stream and that will produce statistics about the number of packets for each service component that have been transmitted within each sampling period. The sampling period can be user-defined and may typically be one second. The data may then be analysed by use of an algorithm which may include further averaging over a longer averaging period, typically or the order of 10 seconds.

According to one embodiment, the algorithm handles one subtitle component within the transport stream, hence each subtitle stream uses its own private invocation.

One example of the statistical analysis of the subtitles will now be described in more detail. According to this embodiment, the technique involves measuring the bit rate used for DVB subtitles for any service over each averaging period to generate at least one statistical indicator. Different combinations of these indicators can be used to identify subtitle genres.

Four statistical indicators are described in more detail below. Further indicators may also be used to identify subtitle genres and a combination of two or more of the indicators may also be used to identify the genre or to verify the identification. Each of the indicators described includes an historical element in its final value. On running the algorithm, the user may define an initialisation value. The depth of history for each indicator may then be established from this value. The indicators may then be recalculated to allow subtitle genres to be established for every new set of subtitle statistics.

### Statistical indicators used on the data may include:

Average Bit Rate: The average bit rate may be calculated as a moving average taken over a period given by the initialisation value. For example, if the initialisation value is 10 seconds, then the average bit rate is the average of the bit rates calculated for each of the last 10 predefined sampling periods if the predefined sampling period is 1 second.

Contiguous Seconds of Zero Bit Rate: The contiguous seconds of zero bit rate may be defined as a count of the number of predefined sampling periods since any bit rate was received. It may be defined as zero for any period during which one or more packets were received, otherwise, it may count upwards for each iteration of the algorithm until the next packet is received.

Histogram Peak for Previous Contiguous Seconds of Zero Bit Rate: The histogram peak for previous contiguous seconds of zero bit rate may be defined as the peak in a Probability Distribution Function (PDF) of recent contiguous seconds of zero bit rate. A PDF may be created by counting the number of recent contiguous seconds of zero bit rate. The peak in the histogram corresponds to the most common value for contiguous seconds of zero bit rate, in other words, the one with the highest probability.

The number of values used to make the PDF may be defined by the initialisation value. Every time a break in the subtitle stream ends, the value of contiguous seconds of zero bit rate may be stored (in place of the oldest value in the list). A value of zero is preferably also stored for every ten seconds of contiguous seconds of non-zero bit rate. Similarly, a value of 20 may be stored for every twenty seconds of contiguous seconds of zero bit rate. This may be done to ensure that long periods of activity (or inactivity) in subtitle bit rate do not skew the indicator. This means that fresh contiguous seconds of zero bit rate are not then compared with very old ones and that the maximum number of histogram bins for the PDF is restricted.

Accumulated Bit Rate: The accumulated bit rate may be defined as the total sum of subtitle packets received since the last period of contiguous zero bit rate. New packets may be added to the accumulated bit rate total until there is an averaging period with zero bit rate. At this point, the accumulated bit rate may be reset to zero.

According to the present embodiment, the subtitle genre is tested whenever a new set of subtitle statistics has been released. To begin with, it is preferably acknowledged that no subtitle genre has been identified and so the genre may be defined as "uncertain". Comparisons may then be made between the incoming statistics and the conditions for each genre. From this, the subtitle genre can be identified. Where no suitable comparison can be made, the genre may remain "uncertain". A record of previous subtitle genres may be kept and the current genre may be added to the record (preferably in the place of the oldest genre). The most common genre within the record may then be selected as the genre for the data stream.

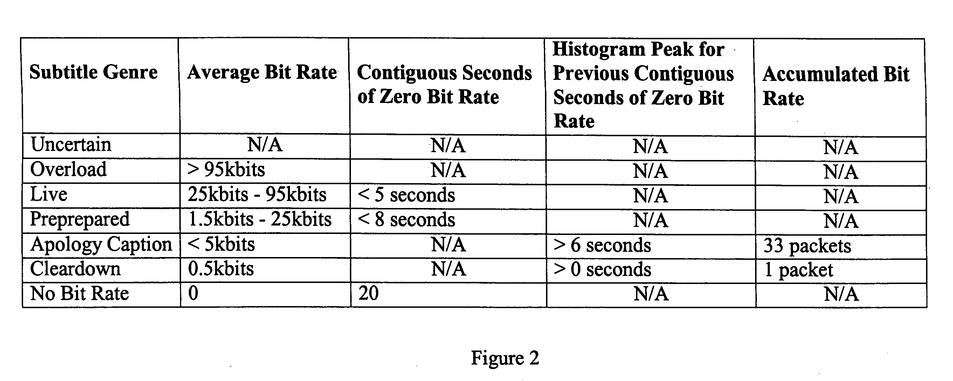

Figure 2 shows typical limits for the statistics which may be chosen for a number of subtitle genres according to one embodiment of the present invention. These limits are provided by way of example only and are not limiting. Limits for further subtitle genres may also be defined in a similar manner. It should be noted that these values are for an initialisation value of 10 with an averaging period of 1 second. They should be changed for any other initialisation value or averaging period and may also need to be re-evaluated depending on the DVB (and other digital systems) multiplex. Also note that one packet equals 1504 bits. The limits shown were calculated for a BBC DTT multiplex carrying five services; one at a constant bit rate and a further four services in a statistical multiplex bundle.

Tighter limits may be chosen if greater certainty is required in the definition of the subtitle genre, although this is likely to lead to more subtitles being classed as "uncertain". The "Overload" genre may be selected when the average bit rate exceeds a predefined limit, in this example, 95 kilobits (kbits) per second (one second being the predefined averaging period in this example).

According to the present embodiment, the algorithm takes half the initialisation value in number of iterations to react to a change in subtitling. A typical moving average period of the order of 10 seconds may be used. Longer moving average periods may flatten the distinctions between genres and may also be slower in reacting to sudden changes in genre. As subtitles can change within a programme or at a programme boundary, it may be useful to set the initialisation value to reflect this. For a monitoring situation, sudden changes can reflect a critical condition that needs urgent attention. Shorter periods would be less accurate because they consider fewer values. When compared to an optimum moving average period, the longer or shorter the averaging period becomes, the less accurate the subtitle genre indication becomes. Selecting a suitable initialisation value involves determining the ideal compromise between accuracy and efficiency of the algorithm.

The most recently established subtitle genres from previous iterations of the algorithm may be kept and the length of this record may be taken from the initialisation value. The most common genre within the record may then be selected as the result of that iteration of the algorithm. A confidence measure is preferably also determined for the selected genre. The confidence measure in the result may be presented as the percentage of votes that the subtitle genre received to be considered most common.

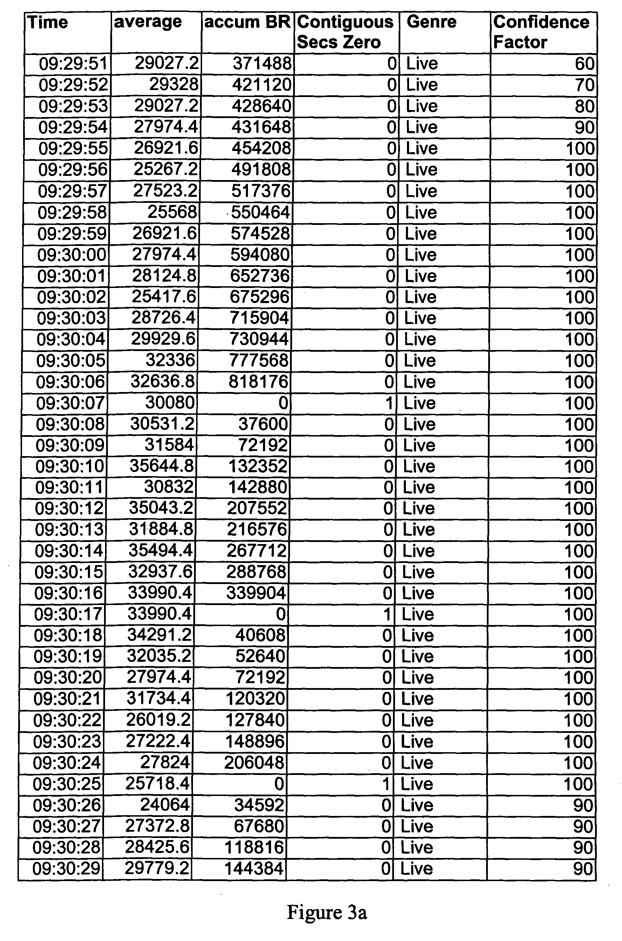

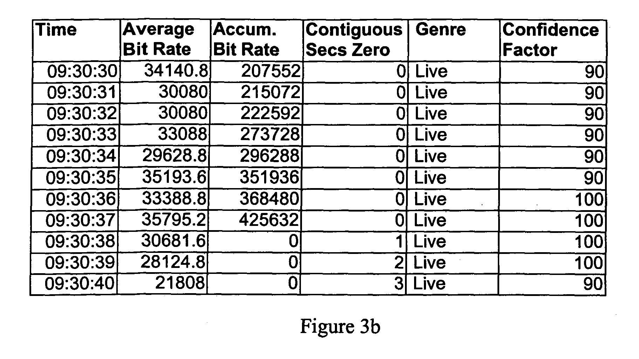

Examples of typical system output are shown in Figures 3 to 5. The average bit rate, the accumulated bit rate, the number of contiguous seconds of zero bit rate, the genre determined and the confidence factor is shown for each averaging period (1 s in this case). In the first example, shown in Figure 3, the genre determined for the programme is "Live". Due to the history of the bit stream being taken into account, the determined genre does not change even when the bit rate temporarily falls to zero.

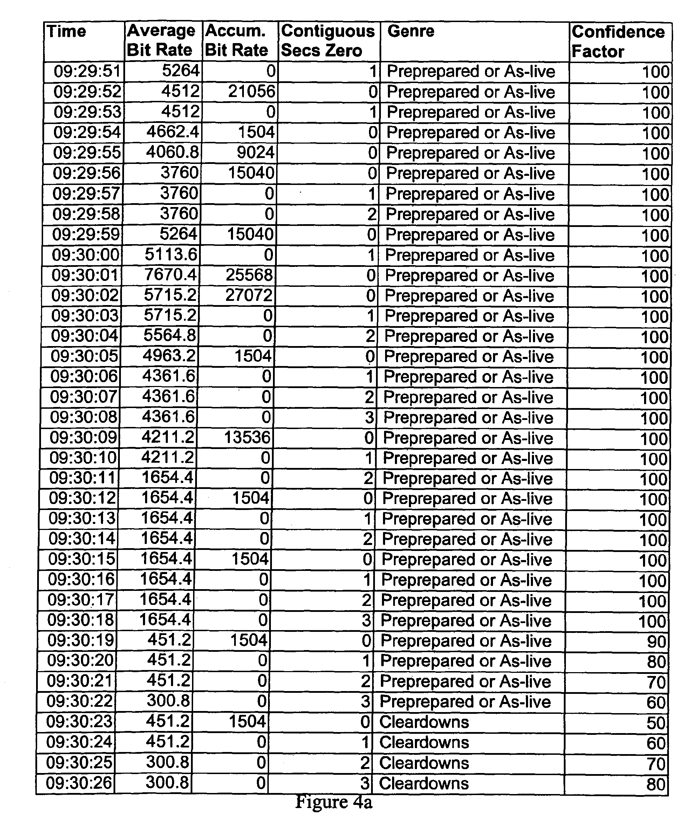

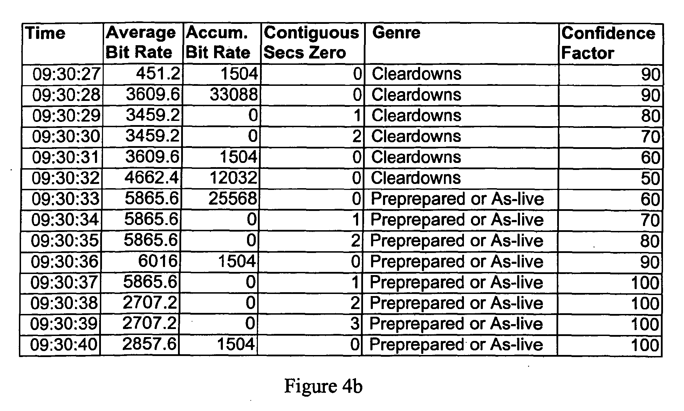

In the example of Figure 4, the subtitle genre is determined as "Prepared or As-live" with a number of "Cleardown" signals detected during the sample. The confidence level for the "Prepared or As-live" determination falls from 100% to 60% as the "Cleardown" signals begin to be detected.

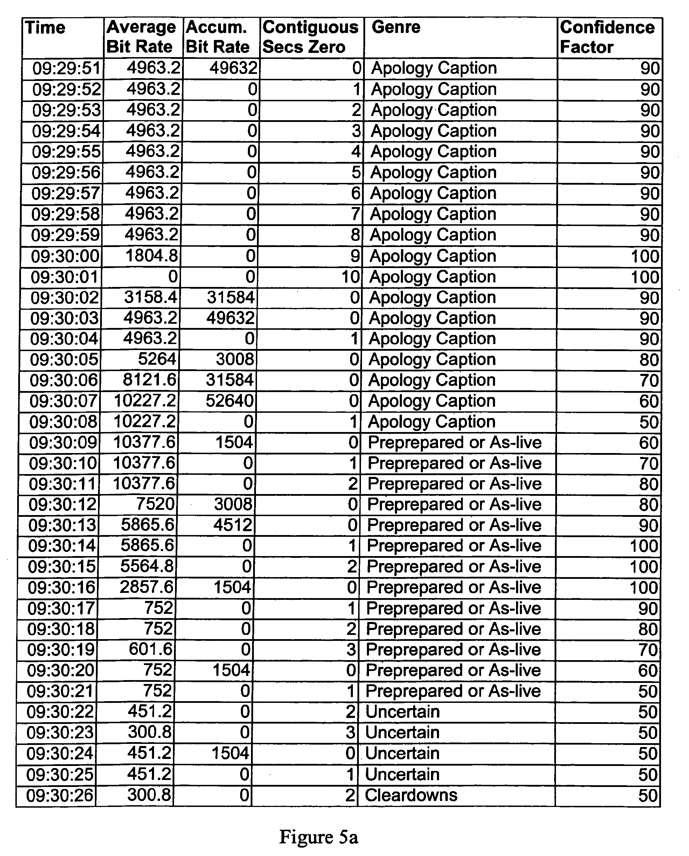

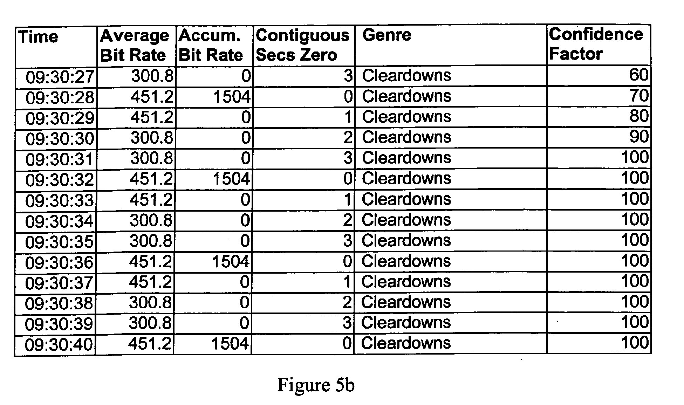

The determined genre of the sample of Figure 5 changes from an "Apology Caption" to "Prepared or As-live" and then becomes "Uncertain" before changing to a "Cleardown" signal.

As shown in the examples given above, subtitling cadences can be extracted from raw subtitle statistics allowing determination of the subtitle genre without the need to decode the transport stream. The process may be implemented independently of metadata and other influences. Genetic algorithms may be used to allow the algorithms to be applied to other multiplexes.

The system may be used as part of a monitoring system for operational areas and for output monitoring, making it a useful monitoring system of digital services, even those that have already been prepared for transmission.

The system may also be used on receipt of the digital transmission, for example to monitor service provision or to advise a user of the type of programme that is being received on a particular channel. According to a further embodiment, the system may be incorporated into user equipment, for example a recording device, such as a video or DVD recorder. When the recording device is programmed, the programme type may be determined, either from the user or from a preprogrammed schedule, which may be accessed remotely by the recording device. The recording device may then monitor the subtitle data, as described above and may only begin recording when the subtitle genre determined matches with the programme type expected. This system may also be used, for example, to avoid recording breaks in the programme, such as commercial breaks, which may be detected by monitoring of the subtitle genre.

The description of the embodiment above is not intended to be limiting in any way and changes may be made to the embodiment described without departing from its scope as defined by the following claims. The features disclosed in the description and in the claims may be incorporated in the invention independently or in combination with other features disclosed.

## Claims

1. A method of processing a data stream in which captions are transmitted, the method comprising determining at least one quantitative characteristic of variation in information content used for transmission of the captions and assigning a caption type to the data stream based on the or each characteristic.

2. A method according to Claim 1 wherein the captions are transmitted as a series of images.

3. A method according to Claim 1 or 2 wherein said at least one quantitative characteristic includes a measure of bit rate associated with said caption.

4. A method according to any preceding claim wherein the caption type is selected from one of a plurality of pre-defined caption types, preferably wherein assigning a caption type includes identifying an error or abnormal caption condition, and further preferably wherein the plurality of pre-defined caption types includes:
an absence of captions;
a predetermined caption, for example an error or apology caption or a cleardown instruction;
a series of pre-prepared block captions of at least one type;
a series of pre-prepared short captions;
a sequence of live captions;
an uncertain or unidentified caption type.

5. A method according to Claim 4 wherein more than one candidate pre-defined caption type is assigned to the data stream, and preferably wherein an initial assignment of more than one candidate caption type is refined based on the history of the data stream.

6. A method according to any preceding claim wherein the captions comprise subtitles.

7. A method according to any of Claims 1 to 5 wherein the captions comprise information for an access service other than subtitles, preferably wherein the captions comprise audio description information or closed signing.

8. A method according to any preceding claim wherein more than one type of caption is analysed, if present.

9. A method according to Claim 7 wherein a caption type is assigned signifying detection of presence or absence of the captions in place of detection of a quantitative measure.

10. A method of processing a data stream in which a non-textual access service may be transmitted, the method comprising determining variation in information content used for transmission of the access service and classifying the data stream based on the variation.

11. A method according to any preceding claim wherein the data stream comprises a television signal, preferably wherein a programme type is assigned to the data stream based on the caption type assigned to the data stream or the classification of the data stream, and further preferably wherein the programme type classification comprises at least one of:
no subtitles;
pre-recorded;
as live;
live broadcast.

12. A method according to Claim 11 wherein the programme type is classified as pre-recorded and wherein the pre-recorded programme is further subclassified.

13. A method according to Claim 11 or 12 further comprising detecting at least one interstitial between caption types in the data stream, preferably wherein the interstitial comprises a change between programmes transmitted or an advertisement break within a programme.

14. A method according to any preceding claim wherein a sample of quasi instantaneous information rate is detected by determining a measure of information in the first sampling interval and an average information rate is determined over a second, longer, averaging period from a plurality of samples.

15. A method according to any preceding claim further comprising monitoring programme output based on analysis of captions or classification based on a non-textual access service, and preferably further comprising reporting the results of monitoring a plurality of channels and/or programmes to a user interface and preferably further comprising triggering an alarm based on the results of monitoring, and suitably wherein a live alarm is triggered during broadcast of a monitored programme.

16. A method according to Claim 15, further comprising compiling a report on broadcast of a plurality of programmes following broadcast.

17. A method of classifying a programme, the method comprising receiving a signal encoding the programme and a series of subtitles, determining at least one quantitative characteristic of variation in the information content of the series of subtitles and classifying the programme into one of a series of predefined programme types based on the or each characteristic.

18. A method according to Claim 17 wherein the subtitles are bit mapped images.

19. A method according to Claim 17 or 18 wherein said at least one quantitative characteristic includes a measure of bit rate associated with said caption.

20. A method according to any of Claims 17 to 19 wherein the quantitative characteristic includes at least one statistical measure of the information content, and is preferably a combination of at least two statistical measures.

21. A method according to any of Claims 17 to 20 wherein the quantitative characteristic is above or below a predetermined threshold and wherein only one statistical measure of the information content is used to classify the programme.

22. A method according to Claim 20 or 21 as dependent on Claim 19 wherein the statistical measures include at least one of:
the average bit rate;
the number of contiguous seconds of bit rate below or above a threshold;
the number of contiguous seconds of zero bit rate;
the histogram peak bit rate for a period;
the histogram peak, over a predetermined period, of the number of contiguous seconds of zero bit rate;
the accumulated bit rate.

23. A method according to any of Claims 17 to 22 further comprising deriving a measure of confidence for the determined programme classification, preferably wherein the measure of confidence is updated as more data is received in the signal.

24. A method according to any of Claims 17 to 23 wherein the determined classification has hysteresis characteristics and is preferably partly determined based on the history of the quantitative characteristic, preferably wherein sudden and/or temporary changes in the determined programme classification are suppressed.

25. A method according to any of Claims 17 to 24 wherein an initial set of parameters are stored for classifying the programme, preferably wherein the initial parameters are modified based on the received data.

26. A method according to any of Claims 17 to 25 further comprising monitoring the content of the programme viewed based on the programme type assigned to the data stream.

27. A method according to any of Claims 17 to 26 further comprising detecting at least one interstitial between determined programme types in the data stream, preferably wherein detecting the interstitial further comprises determining the nature of the interstitial, and preferably further comprising controlling storage or viewing of a programme based on detection of an interstitial.

28. A method according to any of Claims 17 to 27 further comprising receiving further input for use in determining the programme type, and preferably further comprising comparing the determined programme type to the expected programme type.

29. A method according to any of Claims 17 to 28 further comprising storing a programme based on the programme type determined.

30. A method according to any of Claims 17 to 29 further comprising controlling storage of programmes based on the determined programme type, and preferably further comprising storing and updating a list of user preferences based on the determined programme type.

31. Apparatus for processing a data stream in which captions are transmitted, the apparatus comprising:
means for receiving the data stream;
means for determining at least one quantitative characteristic of variation in information content used for transmission of the captions;
means for assigning a caption type to the data stream based on the or each characteristic.

32. Apparatus according to Claim 31 wherein the captions are transmitted as a series of images.

33. Apparatus according to Claim 31 or 32 wherein said at least one quantitative characteristic includes a measure of bit rate associated with said captions, preferably further comprising means for storing the determined bit rate value for a predetermined initialisation period, and preferably wherein the quantitative characteristic is at least one of:
the average bit rate;
the number of contiguous seconds of bit rate above or below a threshold;
the number of contiguous seconds of zero bit rate;
the histogram peak bit rate for a period;
the histogram peak, over a predetermined period, preferably the initialisation period, of the number of contiguous seconds of zero bit rate;
the accumulated bit rate.

34. Apparatus according to any of Claims 31 to 33 wherein the data stream is a digital television signal and wherein the captions comprise subtitles.

35. Apparatus according to any of Claims 31 to 33 wherein the captions comprise a non-textual access service, preferably wherein a binary determination is used in place of said quantitative measure.

36. Apparatus according to Claim 34 or 35 further comprising means for determining a programme type based on the assigned caption type for the data stream.

37. Apparatus according to any of Claims 31 to 35 wherein the caption type determined is at least one of:
an absence of captions;
a predetermined caption, for example an error or apology caption or a cleardown instruction;
a series of pre-prepared block captions of at least one type;
a series of pre-prepared short captions;
a sequence live of captions;
an uncertain or unidentified caption type.

38. Apparatus according to any of Claims 31 to 37 further comprising video storage means.

39. Apparatus according to any of Claims 36 or 38 further comprising means for storing a list of user preferences based on the determined programme types for the programmes viewed, and preferably further comprising means for updating the user preference list according to the programme type viewed.

40. Apparatus, a computer program or computer program means for carrying out a method according to any of Claims 1 to 30.

41. Apparatus for analysing programme output comprising means for analysing captions or an access service in conjunction with other programme information identifying expected programme output and means for reporting a potential discrepancy between the results of analysis of the captions or access service and the expected programme output.
